# EUROPEAN PATENT APPLICATION

(11) **EP 4 738 587 A1**
(43) Date of publication of application: **06.05.2026**
(21) Application number: 24860300.3
(22) Date of filing: 21.08.2024
(51) Int. Cl.: H01M 50/342, H01M 50/578, H01M 50/107

(54) **SECONDARY BATTERY AND BATTERY MODULE INCLUDING SAME**

(30) Priority: 29.08.2023 KR 20230113892
(71) Applicant: LG Energy Solution, Ltd., Seoul 07335 (KR)
(72) Inventor: LEE, Byoung Kook, Daejeon 34122 (KR)
(74) Representative: Goddar, Heinz J.
(86) International application number: PCT/KR2024/012456
(87) International publication number: WO 2025/048380

(57) **Abstract**

The present invention relates to a secondary battery and a battery module including the same, and more particularly, to a secondary battery, in which venting for discharging an internal gas according to a typical design value at room temperature is performed, and faster venting than the existing venting is implemented at a high-temperature condition to quickly reduce internal heat generation and an internal gas pressure, thereby minimizing internal explosive power of the secondary battery, and a battery module including the same.

## Description

### TECHNICAL FIELD

### CROSS-REFERENCE TO RELATED APPLICATION

The present application claims the benefit of the priority of Korean Patent Application No. 10-2023-0113892, filed on August 29, 2023, which is hereby incorporated by reference in its entirety.

### TECHNICAL FIELD

The present invention relates to a secondary battery and a battery module including the same, and more particularly, to a secondary battery, in which venting for discharging an internal gas according to a typical design value at room temperature is performed, and faster venting than the existing venting is implemented at a high-temperature condition to quickly reduce internal heat generation and an internal gas pressure, thereby minimizing internal explosive power of the secondary battery, and a battery module including the same.

### BACKGROUND ART

Secondary batteries are classified into cylindrical and prismatic batteries, in which an electrode assembly is built in a cylindrical or prismatic metal can, and pouch-type batteries, in which an electrode assembly is built in a pouch-type case made of an aluminum laminate sheet, depending on the shapes of the battery cases.

In addition, the electrode assembly built into the battery case may be a power generation element that is chargeable and dischargeable and be classified into a jelly roll-type electrode assembly having a structure in which a separator is interposed between long sheet-shaped positive and negative electrodes coated with an active material and then is wound, a stacked type electrode assembly having a structure in which a plurality of positive and negative electrodes, each of which has a predetermined size, are sequentially stacked with a separator therebetween, and a stack and folding type electrode assembly having a structure in which bicells or full cells are wound by stacking positive and negative electrodes, each of which is provided into a predetermined radical unit, with a separator therebetween are wound.

Among them, the jelly roll-type electrode assembly is widely manufactured because the jelly roll-type electrode assembly is easy to be manufactured and have an advantage of high energy density per weight. The jelly roll-type electrode assembly may be manufactured by assembling a stack, in which long sheet-shaped positive and negative electrodes with a separator therebetween are provided, and winding the stack in a longitudinal direction of the sheet in a state in which a core is in contact with one end of the electrode stack. In addition, the jelly roll-type electrode assembly may be inserted into a battery case provided as a metal can to form the cylindrical secondary battery.

The cylindrical secondary battery is designed with high energy density, and due to the increasing energy density, the lithium secondary battery requires a high level of stability, and thus, the demand for the cylindrical battery is also increasing.

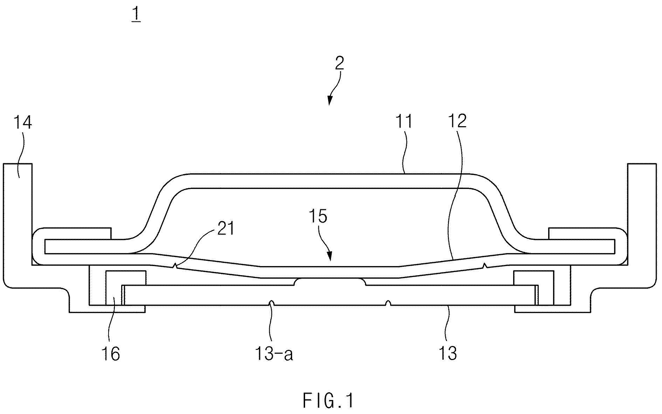

FIG. 1 is a cross-sectional view illustrating a cap assembly in a secondary battery according to the related art.

Referring to FIG. 1, a secondary battery 1 according to the related art includes an electrode assembly (not shown), a can (not shown) that accommodates the electrode assembly, and a cap assembly 2 that covers an upper opening of the can. FIG. 1 is illustrates a specific configuration of the cap assembly 2. The electrode assembly and the can are omitted from the illustration for convenience of explanation. In FIG. 1, the cap assembly 2 may include a top cap 11, a safety vent 12, and a current interrupt device 13. The top cap 11 may be configured to form the outermost terminal for electrical connection with the outside. The safety vent 12 may be disposed at a lower side of the top cap 11 and be connected to the top cap 11 from an outer portion. In the outer portion, the safety vent 12 may be seated on a main gasket 14. The safety vent 12 may be configured so that a central area 15, which is an inner area of the outer portion, is changed in shape when an internal pressure of the can increases. Particularly, the central area 15 may move upward to be deformed into a shape, in which the shape of the safety vent is inverted.

In addition, the current interrupt device 13 may be disposed at the lower side of the safety vent 12, an electrode tab connected to the electrode assembly may be connected to a bottom surface, and the safety vent 12 may be connected to the central area 15. An auxiliary gasket 16 may be disposed on the outer portion of the current interrupt device to prevent contact between the safety vent 12 and the current interrupt device 13 except for the central area 15.

In the related art, the central area 15 of the safety vent 12 and the central area of the current interrupt device 13 are welded to each other. In addition, a notch 13-a may be defined around the central area 15 that is the welded portion. The notch 13-a may be a portion that is broken when the internal pressure of the can rises above a critical point. When the notch 13-a is broken, an inner central portion of the notch 13-a may be broken to be separated from an outer portion of the notch 13-a to cut off the current.

Particularly, before the notch 13-a is broken, a current path is formed from the electrode of the electrode assembly to the electrode tab connected to the electrode, from the electrode tab to the current interrupt device 13 connected to the electrode tab, from the current interrupt device 13 to the safety vent 12 welded to the current interrupt device 13, and from the outer portion of the safety vent 12 to the top cap 11 connected to the safety vent 12. However, if the notch 13-a is broken due to an increase in internal pressure in the can, current may no longer flow from the current interrupt device 13 to the safety vent 12 to cut off the current.

When the internal pressure of the can rises above the critical point, the central portion 15 of the safety vent 12 may move upward. Here, the central portion inside the notch 13-a of the current interrupt device 13, which is the portion welded to the central portion of the safety vent 12, may move upward together with the safety vent 12, but the outer portion of the notch 13-a of the current interrupt device 13 may not ascend but remains in place. Thus, the current may be cut off when a portion of the notch 13-a is broken. For this current cutoff operation, the central portion of the safety vent 12 and the central portion of the current interrupt device 13 are connected to each other. In addition, in the related art, the welding is used for this coupling.

A venting notch 21 may be formed in the safety vent 12. After the safety vent 12 is deformed upward, if the internal pressure continues to increase, the venting notch 21 formed in the safety vent 12 may be broken. Thus, the internal gas may be discharged to the outside. That is, the internal gas may escape through the portion at which the notch 13-a of the current interrupt device 13 is broken and then escape again through the portion at which the venting notch 21 of the safety vent 12 is broken. In addition, the gas may be finally discharged to the outside of the secondary battery 1 through a gas discharge hole (not shown) defined in the top cap.

However, in the related art, there is a problem such as a thermal runaway phenomenon in which the secondary battery is exploded with great explosive force under the high-temperature condition. That is, there is a problem that an intensity of explosion of the secondary battery at the high-temperature condition is significantly greater than an intensity of explosion of the secondary battery that is exploded due to the internal gas at room temperature condition.

### DISCLOSURE OF THE INVENTION

### TECHNICAL PROBLEM

The present invention has been made to solve the above problems, and an object of the present invention is to provide a secondary battery and a battery module including the same, and more particularly, to a secondary battery, in which venting for discharging an internal gas according to a typical design value at room temperature is performed, and faster venting than the existing venting is implemented at a high-temperature condition to quickly reduce internal heat generation and an internal gas pressure, thereby minimizing internal explosive power of the secondary battery, and a battery module including the same.

### TECHNICAL SOLUTION

A secondary battery according to the present invention includes: an electrode assembly; a can in which the electrode assembly is accommodated; and a cap assembly configured to cover an opening of the can, wherein the cap assembly includes: a top cap provided with the outermost terminal for electrical connection to the outside; a safety vent disposed below the top cap and connected to the top cap at an outer portion thereof, wherein, when an internal pressure of the can rises above a critical value, a shape or position of a predetermined area inside the outer portion are changed; and a current interrupt device (CID) which is disposed below the safety vent and provided with an electrode tab connected to the electrode assembly on a bottom surface thereof, and of which a portion of a top surface is bonded to the safety vent on the predetermined area of the safety vent, wherein the safety vent comprises a venting notch having a recessed shape in a top or bottom surface thereof, and an additional material is attached to a surface of the venting notch, wherein the additional material has thermal conductivity greater than that of the safety vent.

The venting notch may be formed in the bottom surface of the safety vent.

The venting notch may have a V shape, and the additional material may include a first portion attached to the surface of the venting notch. The first portion may have a thickness less than that of the safety vent.

The first portion may be applied to the surface of the venting notch to cover an entire surface of the venting notch.

The additional material may further include a second portion attached to a surface of the safety vent, which is opposite to the surface in which the venting notch is formed, wherein the second portion may be attached to a portion corresponding to a position at which the venting notch is disposed.

The safety vent may include an aluminum material, and the additional material may include any one of silver and copper materials.

The additional material may be attached through either soldering or dipping.

The safety vent may include an aluminum material, and the additional material may include any one of silicon carbide (SiC), beryllium oxide (BeO), aluminum nitride (AlN), aluminum oxide (Al₂O₃), carbon, and polymer materials.

The additional material may be attached through either spraying or dipping.

A battery module according to the present invention includes the plurality of secondary batteries, which are described above.

### ADVANTAGEOUS EFFECTS

In the secondary battery and the battery module including the same according to the present invention, the venting for discharging the internal gas according to the typical design value at room temperature may be performed, and faster venting than the existing venting may be implemented at the high-temperature condition to quickly reduce the internal heat generation and the internal gas pressure, thereby minimizing the internal explosive power of the secondary battery.

### BRIEF DESCRIPTION OF THE DRAWINGS

FIG. 1 is a cross-sectional view illustrating a cap assembly in a secondary battery according to the related art.
FIG. 2 is a cross-sectional view illustrating a secondary battery according to Embodiment 1 of the present invention.
FIG. 3 is an enlarged cross-sectional view of an area A of FIG. 2.
FIG. 4 is a cross-sectional view illustrating a secondary battery according to Embodiment 2 of the present invention.
FIG. 5 is an enlarged cross-sectional view of an area A' of FIG. 4.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

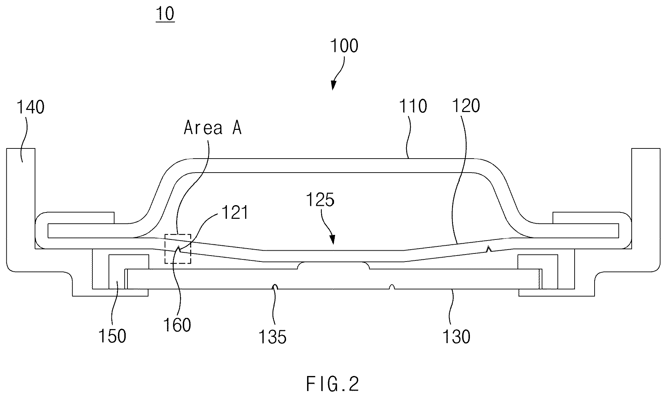

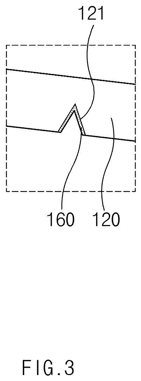

FIG. 2 is a cross-sectional view illustrating a secondary battery according to Embodiment 1 of the present invention. FIG. 3 is an enlarged cross-sectional view of an area A of FIG. 2.

Hereinafter, a secondary battery 10 according to Embodiment 1 of the present invention will be described with reference to FIGS. 2 to 3.

The secondary battery 10 according to Embodiment 1 of the present invention includes an electrode assembly (not shown), a can (not shown), and a cap assembly 100.

The electrode assembly may be formed by alternately disposing a positive electrode, a separator, and a negative electrode. The electrode assembly may be a jelly roll-type electrode assembly 110 in which the electrodes and the separator are alternately disposed to be wound. The electrode assembly 110 may be an electrode winding body in which one or more positive electrodes, one or more negative electrodes, and one or more separators are wound around each other.

The can may be configured so that the electrode assembly inserted therein. The can may an inner space into which the electrode assembly is vertically inserted. The vertical insertion may mean that the electrode assembly is inserted so that a winding axis of the electrode assembly is perpendicular to a bottom portion of the can. The can may have an opening at an upper side thereof. That is, the can may be a configuration which has the opened upper side and includes a bottom portion and sidewalls. The electrode assembly and the can may be an electrode assembly and a can, which are typically used in the cylindrical secondary battery.

Referring to FIG. 2, the cap assembly 100 may be configured to cover the upper opening of the can. Particularly, the cap assembly 100 may be configured to include a top cap 110, a safety vent 120, and a current interrupt device 130 (CID).

The top cap 110 may be configured to form the outermost terminal for electrical connection with the outside. The top cap 110 may include a central portion, which has a convex shape upwardly spaced a predetermined distance from the safety vent 120 described below, and an outer portion connected to the safety vent 120.

The safety vent 120 may be disposed below the top cap 110 and connected to the top cap 110 at the outer portion. In addition, the safety vent 120 may be configured to be changed in shape or position of a predetermined area inside the outer portion when an internal pressure of the can rises above a critical value. The predetermined area within the outer portion may have a partial shape of a disk having the lowest height at a center thereof. The safety vent may be connected to the current interrupt device 130 described below at a central portion 125.

The current interrupt device 130 may be disposed below the safety vent 120. The electrode tab (not shown) connected to the electrode assembly may be connected to a bottom surface of the current interrupt device 130. In addition, the current interrupt device 130 may be configured to be connected to the safety vent 120 by welding or the like on the predetermined area of the safety vent 120. In addition, the predetermined area may be, for example, the central portion 125.

In the secondary battery 10 according to Embodiment 1 of the present invention, the safety vent 120 may include a venting notch 121 having a recessed shape in a top or bottom surface thereof. As illustrated in FIG. 2, as a specific example, the venting notch 121 may be formed in the bottom surface of the safety vent 120. In addition, the venting notch 121 may have a V shape.

In addition, referring to FIGS. 2 and 3, an additional material 160 is attached to a surface of the venting notch 121. The additional material 160 may be a material having thermal conductivity higher than that of the safety vent 120.

When configured in this manner, venting for discharging an internal gas may be performed according to a typical design value at room temperature, and faster venting than the existing venting may be implemented under a high temperature condition. Thus, internal explosion power of the secondary battery may be minimized by quickly reducing internal heat generation and an internal gas pressure.

Particularly, the safety vent 120 may be typically made of an aluminum material. it may maintain its existing mechanical properties regardless of thermal conductivity at room temperature. Thus, the venting notch 121 may be broken at an originally designed venting pressure to discharge the internal gas.

However, in the case of the high temperature condition, the additional material 160 having the high thermal conductivity may quickly transfer high-temperature heat to a portion of the venting notch 121. Thus, the venting notch 121 may be broken early and quickly under the high-temperature condition, and the internal gas may be quickly discharged to the outside of the secondary battery 10.

This may be a method of changing physical properties at room temperature and properties at the high-temperature condition at the portion of the venting notch 121. It may be possible to advance a venting time by locally and rapidly deteriorating the physical properties only in the venting notch 121 area under the high-temperature condition. This may prevent large explosion that may occur in the secondary battery 10 at the high temperature.

Particularly, the additional material 160 may be attached to the surface of the V-shaped venting notch 121. The additional material 160 may be attached to the surface of the venting notch 121 to cover the entire surface of the V-shaped venting notch 121. In this case, more effective heat transfer and breakage of the venting notch 121 may be achieved under the high-temperature condition.

In addition, the additional material 160 may be provided to have a thickness thinner than that of the safety vent 120. For example, the additional material 160 may be thinly applied to the surface of the venting notch 121 to cover the entire surface of the venting notch 121.

The safety vent 120 may include an aluminum material, and the additional material 160 may include either silver or copper material. Since the silver and copper have thermal conductivity higher than that of aluminum, the silver and copper may effectively transfer heat to the portion of the venting notch 121 under the high temperature condition to cause the breakage.

When the additional material 160 is a metal material such as silver or copper, the additional material 160 may be attached or applied by either soldering or dipping.

Here, the soldering may be a method of coupling a base material without being melted using a molten metal. That is, it may be a method of applying the additional material 160 while applying silver and copper without melting the portion of the venting notch 121.

The dipping may be a method of applying the additional material 160 on the venting notch 121 by immersing the safety vent 120 in a solution of the additional material 160 while covering a portion other than the venting notch 121 in a state of exposing the portion of the venting notch 121.

The additional material 160 may be a non-metallic material. For example, the additional material 160 may include any one of silicon carbide (SiC), beryllium oxide (BeO), aluminum nitride (AlN), aluminum oxide (Al₂O₃), carbon, and a polymer material.

When the additional material 160 is a non-metal, the additional material 160 may be attached or applied by either spraying or dipping.

The spray method may be a method in which a portion other than the venting notch 121 is covered by a mask, the venting notch 121 is exposed, and a solution of the additional material 160 is sprayed onto the safety vent 120 to coat the venting notch 121 with the additional material 160. In addition, the dipping method may be the same as described above.

The battery module according to the present invention may include a plurality of secondary batteries 10 according to Embodiment 1 described above.

### Embodiment 2

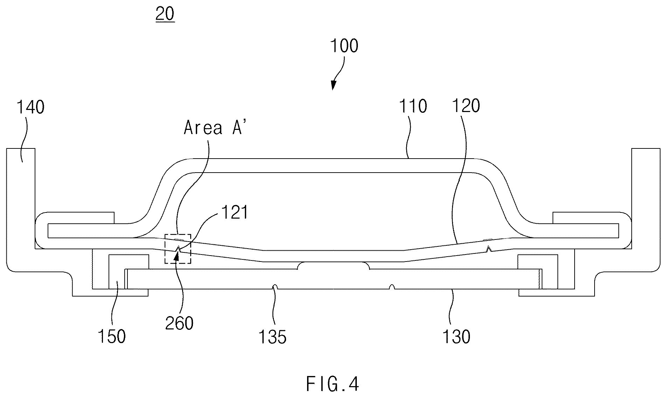

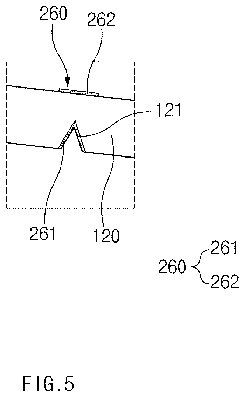

FIG. 4 is a cross-sectional view illustrating a secondary battery according to Embodiment 2 of the present invention. FIG. 5 is an enlarged cross-sectional view of an area A' of FIG. 4.

Embodiment 2 of the present invention is different from Embodiment 1 in that the additional material is formed on both the top and bottom surfaces of the safety vent in the secondary battery according to Embodiment 1 of the present invention.

Contents in common with Embodiment 1 will be omitted as much as possible, and Embodiment 2 will be described. That is, it is obvious that if content that is not described in Embodiment 2 is needed, it may be regarded as the content of Embodiment 1.

Referring to FIGS. 4 and 5, a secondary battery according to Embodiment 2 of the present invention may have a following specific form.

In a secondary battery 20 according to Embodiment 2 of the present invention, an additional material 260 may include a first portion 261 and a second portion 262. The first portion 261 may be a portion attached to a surface of a venting notch 121. In addition, the second portion 262 may be a portion attached to a surface opposite to a the surface on which the venting notch 121 is formed in a safety vent 120.

When the venting notch 121 is formed in a bottom surface of the safety vent 120, the first portion 261 may be a portion of the additional material 260 that is applied or attached to a portion of the surface of the venting notch 121 on a bottom surface of the safety vent 120, and the second portion 262 may be a portion of the additional material that is applied or attached to a position corresponding to a position at which the venting notch 121 is formed on the top surface of the safety vent 120. Alternatively, the second portion 262 may be a portion of the additional material 260 attached to a position corresponding to the position of the first portion 261 in the safety vent 120. The first portion 261 and the second portion 262 in a vertical direction may be positions at which the first portion 261 and the second portion 262 at least partially overlap each other.

Here, each of the first portion 261 and the second portion 262 may have a thickness thinner than that of the safety vent 120. In addition, the first portion 261 may be applied on the surface of the venting notch 121 to cover the entire surface of the venting notch 121.

When formed in this manner, heat conduction may occur on both top and bottom surfaces under a high-temperature situation, and thus, the venting notch 121 may be broken more quickly and effectively.

Therefore, the secondary battery 20 according to Embodiment 2 of the present invention, which has the above configuration, may perform the venting for discharging an internal gas according to a typical design value, but may implement faster and more effective venting than the conventional one under the high-temperature condition. This may allow for quickly reducing the internal heat generation and the internal gas pressure to more effectively prevent large explosion of the secondary battery.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10, 20: Secondary battery
100: Cap assembly
110: Top cap
120: Safety vent
121: Venting notch
130: Current interrupt device (CID)
135: Interrupt notch
140: Main gasket
150: Auxiliary gasket
160, 260: Additional material
261: First portion
262: Second portion

## Claims

1. A secondary battery comprising:
an electrode assembly;
a can in which the electrode assembly is accommodated; and
a cap assembly configured to cover an opening of the can,
wherein the cap assembly comprises:
a top cap provided with the outermost terminal for electrical connection to the outside;
a safety vent disposed below the top cap and connected to the top cap at an outer portion thereof, wherein, when an internal pressure of the can rises above a critical value, a shape or position of a predetermined area inside the outer portion are changed; and
a current interrupt device (CID) which is disposed below the safety vent and provided with an electrode tab connected to the electrode assembly on a bottom surface thereof, and of which a portion of a top surface is bonded to the safety vent on the predetermined area of the safety vent,
wherein the safety vent comprises a venting notch having a recessed shape in a top or bottom surface thereof, and
an additional material is attached to a surface of the venting notch,
wherein the additional material has thermal conductivity greater than that of the safety vent.

2. The secondary battery of claim 1, wherein the venting notch is formed in the bottom surface of the safety vent.

3. The secondary battery of claim 1, wherein the venting notch has a V shape, and
the additional material comprises a first portion attached to the surface of the venting notch.

4. The secondary battery of claim 3, wherein the first portion has a thickness less than that of the safety vent.

5. The secondary battery of claim 4, wherein the first portion is applied to the surface of the venting notch to cover an entire surface of the venting notch.

6. The secondary battery of claim 3, wherein the additional material further comprises a second portion attached to a surface of the safety vent, which is opposite to the surface in which the venting notch is formed,
wherein the second portion is attached to a portion corresponding to a position at which the venting notch is disposed.

7. The secondary battery of claim 1, wherein the safety vent comprises an aluminum material, and
the additional material comprises any one of silver and copper materials.

8. The secondary battery of claim 7, wherein the additional material is attached through either soldering or dipping.

9. The secondary battery of claim 1, wherein the safety vent comprises an aluminum material, and
the additional material comprises any one of silicon carbide (SiC), beryllium oxide (BeO), aluminum nitride (AlN), aluminum oxide (Al₂O₃), carbon, and polymer materials.

10. The secondary battery of claim 9, wherein the additional material is attached through either spraying or dipping.

11. A battery module comprising the plurality of secondary batteries of claim 1.
